# EUROPEAN PATENT APPLICATION

(11) **EP 4 837 766 A1**
(43) Date of publication of application: **11.11.2026**
(21) Application number: 26166607.7
(22) Date of filing: 23.03.2026
(51) Int. Cl.: B60K 37/20

(54) **VEHICLE INSTRUMENT PANEL ASSEMBLY AND VEHICLE**

(30) Priority: 07.05.2025 CN 202510589103
(71) Applicant: Stellantis Auto SAS, 78300 Poissy (FR)
(72) Inventor: GUI, Kefei, Changsa, 410016 (CN); HAN, Bo, Shanghai, 200233 (CN); FANG, Wei, Shanghai, 200233 (CN); FENG, Zhongyun, Shanghai, 200233 (CN); FU, Xuezhong, Shanghai, 200233 (CN)
(74) Representative: BCIP

(57) **Abstract**

The present disclosure relates to a vehicle instrument panel assembly and a vehicle. The vehicle instrument panel assembly comprises: a first trim and a second trim adjacent to each other, the first trim is provided with a guide rail and a first appearance surface, and the second trim is provided with a sliding piece and a second appearance surface; wherein the sliding piece is configured to be capable of sliding in the guiding rail along a first direction, and the sliding piece is provided with a position-limiting portion configured to limit relative positions of the sliding piece and the guide rail along a second direction so as to limit a gap between the first appearance surface and the second appearance surface when the sliding piece slides to a predetermined position, wherein the second direction is perpendicular to the first direction. The gap between the first appearance surface of the first trim and the second appearance surface of the second trim is controlled by the mutual position-limiting between the guide rail and the sliding piece, thereby solving the problem of difficult matching between the trims caused by the complex structure and the long dimensional chains of the vehicle instrument panel assembly.

## Description

### RELATED FIELD

The present disclosure relates to the technical field of vehicle components, and more particularly, to a vehicle instrument panel assembly and a vehicle comprising the same.

### BACKGROUND

The instrument panel assembly is a component integrating safety, functionality, comfort, and aesthetics in a vehicle. It is also the assembly components with the most complex structure and containing the largest number of parts in the vehicle interior. Located in the front visible area of the vehicle, it requires a sleek and elegant design with a coordinated layout. Each component of the instrument panel assembly needs to form a direct or indirect rigid connection with the vehicle body sheet metal through a connection structure. The front end of the instrument panel assembly and the engine hood, the two sides and the door trim panel, the bottom and the center console and the auxiliary instrument panel assembly all require precise gap and flush control. These multi-dimensional assembly constraints necessitate thorough consideration of the cumulative effects of the dimensional chain during the design process.

The conventional position-limiting method for the instrument panel assembly is to position-limit an instrument panel frame with a Y0 reference (a middle surface in a vehicle width direction), and other components of the instrument panel assembly are installed to the instrument panel frame. Considering the molding shrinkage characteristics of the plastic base material and the cumulative tolerances of long dimensional chains, a gap tolerance of up to approximately 4mm may occur in the matching area of the instrument panel assembly and the door trim. Since the door trim is a moving piece, this gap can generally be accepted by the user. However, not all vehicle models adopt an integrated decorative trim of the instrument panel assembly. In some vehicle models, the decorative trim of the instrument panel assembly needs to be divided into multiple components. If the divided decorative trims of the instrument panel assembly and the instrument panel frame are still directly connected, it is difficult to control the matching quality of the decorative trims. This may result in significant gaps and flush, which can severely compromise the perceived interior quality and negatively impact the user experience.

### SUMMARY

In view of the above issues, the present disclosure provides a vehicle instrument panel assembly and a vehicle, and for two trims matched with each other, one of the trims is designated as a matching reference relative to the other trim, thereby solving the problem of significant gap caused by long dimensional chain tolerances in a complex assembly relationship.

To this end, the present disclosure provides a vehicle instrument panel assembly comprising a first trim and a second trim, wherein the first trim is provided with a guide rail and a first appearance surface, and the second trim is provided with a sliding piece and a second appearance surface, and the first appearance surface is adjacent to the second appearance surface; wherein the sliding piece is configured to be capable of sliding in the guiding rail along a first direction, and the sliding piece is provided with a position-limiting portion configured to limit relative positions of the sliding piece and the guide rail along a second direction so as to limit a gap between the first appearance surface and the second appearance surface when the sliding piece slides to a predetermined position, wherein the second direction is perpendicular to the first direction.

According to the above technical concept, the present disclosure may further include any one or more of the following alternatives.

According to some alternatives, wherein the guide rail is provided at an end of the first trim along the second direction, the sliding piece is provided at an end of the second trim facing the first trim, the sliding piece comprises a slider extending along the first direction, and the guide rail comprises a groove having an opening configured to allow the slider to enter into the groove along the first direction.

According to some alternatives, wherein the groove comprises a first wall, a transition section extending from the first wall, and a second wall extending from the transition section, wherein the first wall and the second wall are arranged to face each other, and the first wall and the second wall gradually approach each other in a direction in which the sliding piece slides to the predetermined position.

According to some alternatives, wherein the first wall and the second wall form an angle of 3° to 10°.

According to some alternatives, wherein the first wall is provided with a position-limiting rib protruding along the second direction, and when the sliding piece slides to the predetermined position, the position-limiting rib abuts against the sliding piece.

According to some alternatives, wherein the position-limiting portion comprises a position-limiting ridge protruding from the slider in the second direction, and when the sliding piece slides to the predetermined position, the position-limiting ridge abuts against the second wall.

According to some alternatives, wherein the slider or the transition section is provided with a protruding portion, and when the sliding piece slides to the predetermined position, the slider and the transition section abuts against each other through the protruding portion so as to limit flushness between the first appearance surface and the second appearance surface.

According to some alternatives, wherein the guide rail is integrally formed with the first trim, and/or the sliding piece is integrally formed with the second trim.

According to some alternatives, further comprising an instrument panel frame, wherein the first trim and the second trim are fixed to the instrument panel frame by screws and/or clips.

A second aspect of the present disclosure provides a vehicle comprising the vehicle instrument panel assembly according to the first aspect of the present disclosure.

Compared with the prior art, various beneficial effects may be generated by applying the vehicle instrument panel assembly according to the present disclosure, in particular: the guide rail is provided on the first trim, the sliding piece is provided on the second trim, and the sliding piece comprises a position-limiting portion, and when the sliding piece slides to the predetermined position in a first direction along the guide rail, the position-limiting portion constrains the sliding piece and the guide rail to each other along the second direction perpendicular to the first direction. In this way, the gap between the first appearance surface of the first trim and the second appearance surface of the second trim is controlled by the mutual position-limiting between the guide rail and the sliding piece, thereby solving the problem of difficult matching between the trims caused by the complex structure and the long dimensional chains of the vehicle instrument panel assembly.

### BRIEF DESCRIPTION OF THE DRAWINGS

Other features and advantages of the present disclosure will be better understood through the following preferred embodiments described in detail with reference to the accompanying drawings. In the drawings, the same reference numerals indicate the same or similar components.
FIG. 1 is a schematic structural view of a vehicle instrument panel assembly according to an embodiment of the present disclosure.
FIG. 2 is a componentially enlarged schematic view of the vehicle instrument panel assembly.
FIG. 3 is a schematic structural view of a first trim and a second trim in an unmatched state.
FIG. 4 is a schematic structural view of the first trim and the second trim in a semi-mated state.
FIG. 5 is a schematic structural view of the first trim and the second trim in a matched state.
FIG. 6 is a schematic structural view of a guide rail of the first trim.
FIG. 7 is a schematic structural view of a sliding piece of the second trim.
FIG. 8 is a cross-sectional schematic view taken along the section A-A of FIG. 2.
FIG. 9 is a cross-sectional schematic view taken along the section B-B of FIG. 2.
FIG. 10 is a schematic structural view of clip-fit fastening points of the second trim.
FIG. 11 is a schematic structural view of screw fastening points of the second trim.

Elements in the figures are illustrated for simplicity and clarity and are not necessarily drawn to the exact scale. It should be understood that these drawings are not only intended to explain and illustrate the present disclosure, but also contribute to the definition of the present disclosure if necessary.

### DETAILED DESCRIPTION

The implementation and usage of the embodiments are discussed in detail below. However, it is understood that the specific embodiments discussed herein are merely intended to illustrate specific ways of implementing and using the present disclosure, and are not intended to limit the protection scope of the present disclosure.

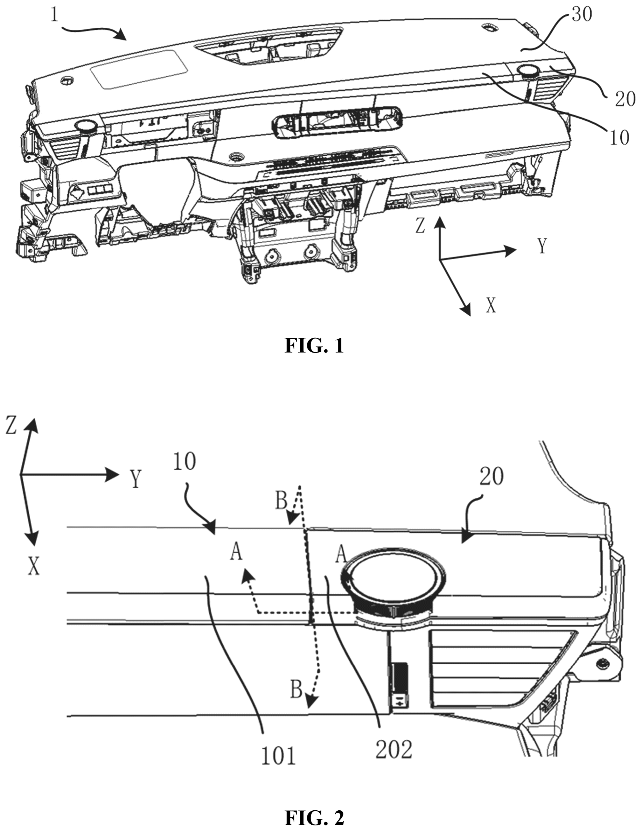

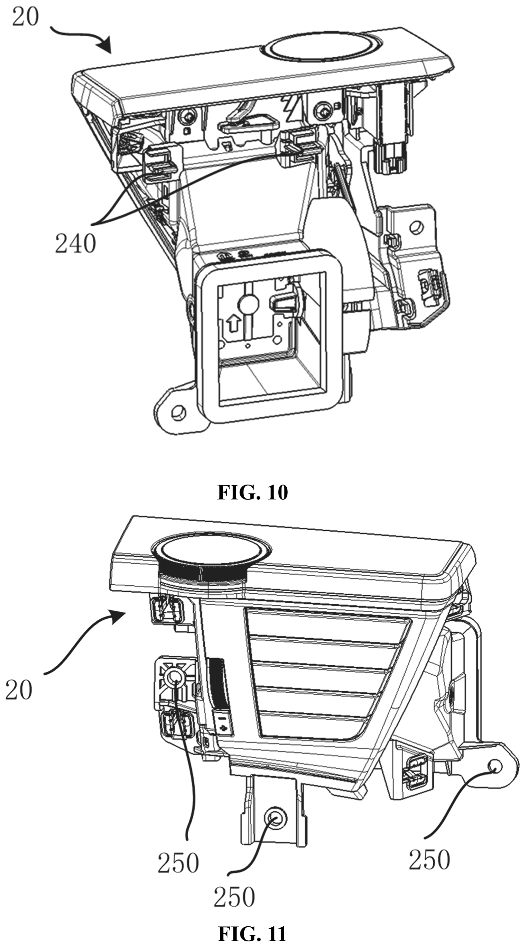

The directional terms and positional terms in the present disclosure may be explained with reference to the exemplary structures shown in FIGS. 1 to 11. The "X" direction corresponds to an extension direction of the guide rail, the "Y" direction corresponds to a direction perpendicular to the "X" direction on the matching plane of the first trim and the second trim, and the "Z" direction corresponds to a direction perpendicular to the XY plane. In the illustrated embodiment, for example, the "X" direction, the "Y" direction, and the "Z" direction correspond to the length, width, and height directions of the vehicle, respectively. The sequential terms "first", "second", etc. are used to describe various elements without intending to define the positional, temporal or importance relationship of these elements, and such terms are used only to distinguish one element from another.

In the description of the present disclosure, it should also be noted that, unless otherwise expressly specified or limited, the terms "connection" and "installation" should be understood in a broad sense, for example, it may be a fixed connection, an integral connection, or a detachable connection; it may be a direct connection, an indirect connection through an intermediate medium, or internal communication between two elements. For those skilled in the art, the specific meanings of the above terms in the present disclosure can be understood according to specific situations.

Preferred embodiments of the present disclosure are described below with reference to the accompanying drawings. FIG. 1 schematically shows a vehicle instrument panel assembly 1, and FIG. 2 is a componential enlarged view of a matching position of a first trim 10 and a second trim 20 shown in FIG. 1. In the drawings of the present disclosure, the first trim 10 is exemplified as a central decorative trim strip, the second trim 20 is exemplified as a decorative trim attached to an air outlet of the air conditioner. However, it is not intended to limit the scope of the present disclosure, the first trim 10 and the second trim 20 may also refer to any two adjacent other trims in the vehicle instrument panel assembly. Furthermore, the trims may not only be limited to appearance trims, but also may be integrated with corresponding functional modules in the vehicle instrument panel assembly.

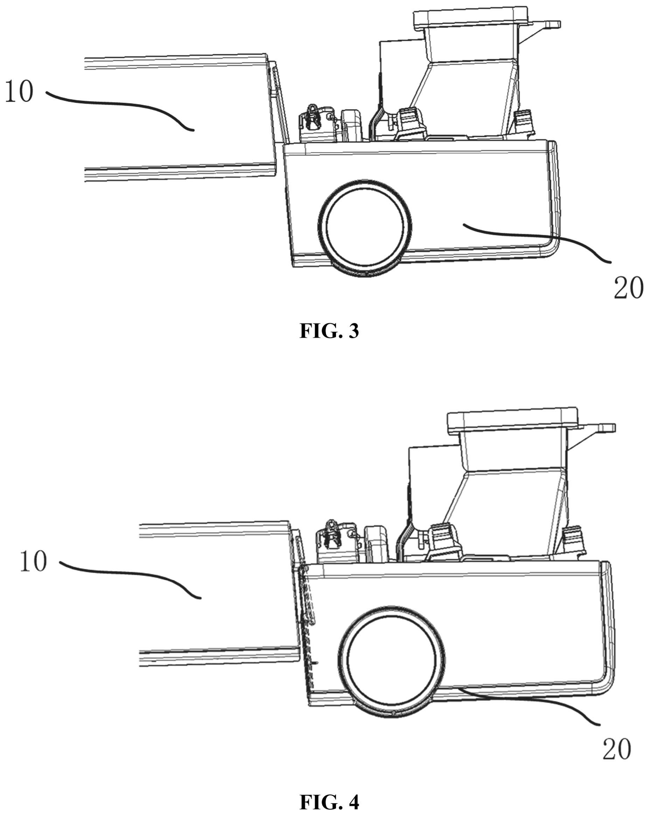

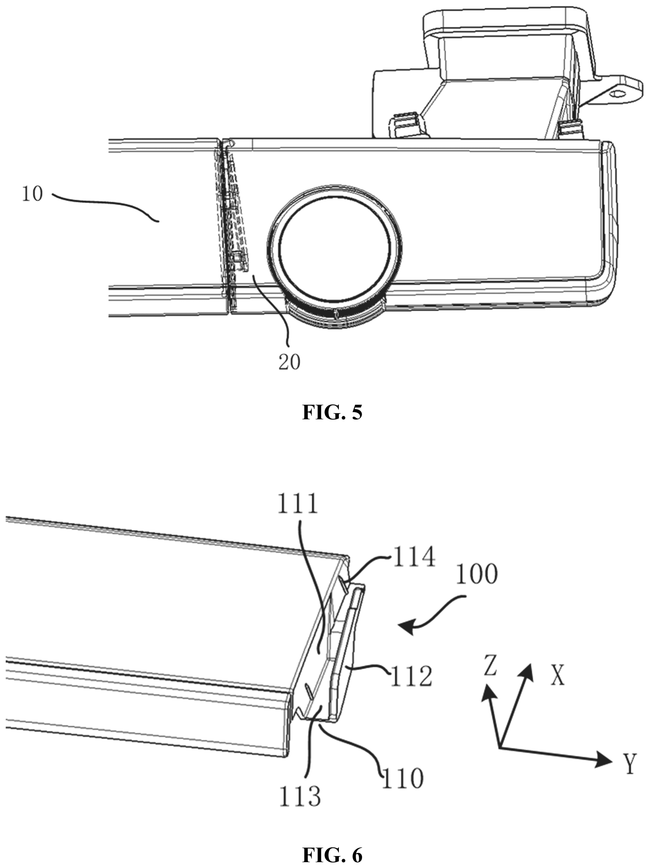

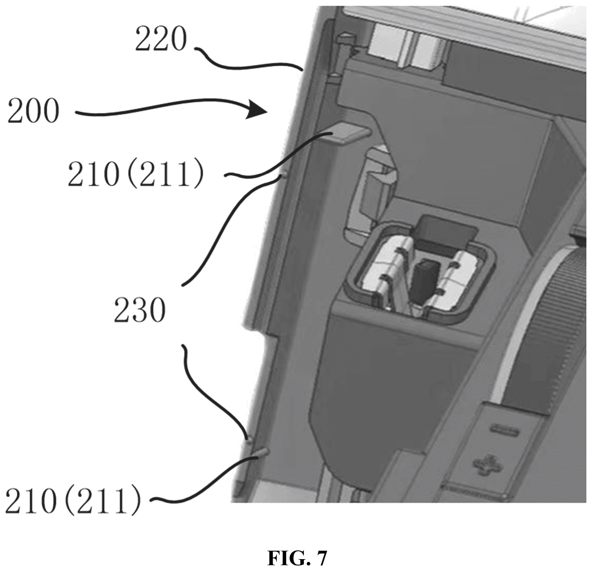

FIG. 3 to FIG. 5 illustrate a matching process in which the first trim 10 and the second trim 20 match each other. The first trim 10 is provided with a guide rail 100 and a first appearance surface 101, and the second trim 20 is provided with a sliding piece 200 and a second appearance surface 202, and the first appearance surface 101 and the second appearance surface 202 are adjacent surfaces that require matching with each other. Regarding the structure of the guide rail 100, referring to FIG. 6, regarding the structure of the sliding piece 200, referring to FIG. 7, the sliding piece 200 be capable of sliding to a predetermined position in the guide rail 100 along a X direction, thereby enabling the matching between the first appearance surface 101 and the second appearance surface 202. The sliding piece 200 is further provided with a position-limiting portion 210, which is configured to at least limit the guide rail 100 in the Y direction, so as to limit the gap between the first appearance surface 101 and the second appearance surface 202 when the sliding piece 200 slides to the predetermined position. The sliding piece 200 reaching the predetermined position can be restrained by adding a position-limiting structure on the guide rail 100, or by utilizing the surrounding components of the first trim 10 and the second trim 20. For example, in the vehicle instrument panel assembly 1 shown in FIG. 1, in addition to the first trim member 10 and the second trim member 20 matched with each other, an upper instrument decorative trim 30 is further provided along the X direction of the first trim 10 and the second trim 20, and the first trim 10 and the second trim 20 in the X direction can be limited by the upper instrument decorative trim 30 and the guide rail 100; and the first trim 10 with the second trim 20 in the Y direction can be limited by the position-limiting portion 210. Then, when the sliding piece 200 slides to the predetermined position, the first trim 10 and the second trim 20 can be limited in the XY plane, which ensures that the Y-directional gap between the first appearance surface 101 and the second appearance surface 202 is controllable, and improves the matching effect of the first trim 10 and the second trim 20, thereby enhancing the quality of the vehicle interior trim, and solving the problem of difficult matching between the trims caused by the complex structure and the long dimensional chains of the vehicle instrument panel assembly. It can be understood that the sliding movement of the sliding piece is relative., i.e., the first trim can be installed first, and then the sliding piece of the second trim is pushed along the guide rail, alternatively, the second trim can be installed first, with the guide rail of the first trim component aligned with the sliding piece and then pushed therein. In either case, the first trim and the second trim can be guided in the X direction.

With continued reference to FIG. 6, the guide rail 100 is provided at an end of the first trim 10 in the Y direction, with the X direction of the guide rail 100 substantially extending along the matching direction of the first appearance surface 101 and the second appearance surface 202. The guide rail 100 comprises a groove 110 having an opening configured to allow the slider 220 to enter into the groove 110 along the X direction. Referring to FIG. 7, the sliding piece 200 is provided at an end of the second trim 20 facing the first trim 10, the sliding piece 200 comprises a slider 220 extending along the X direction, and the slider 220 may enter the groove 110 in the X direction. The guide rail 100 and the sliding piece 200 are arranged at the matching area of the first appearance surface 101 and the second appearance surface 202, which can directly control the gap between the first trim 10 and the second trim 20. Additionally, the slider 220 extends in the X direction, increasing the matching length between the sliding piece 200 and the guide rail 100, thereby enhancing the matching effect.

Specifically, the groove 110 of the guide rail 100 comprises a first wall 111, a transition section 113 extending from the first wall 111 to the second trim 20, and a second wall 112 extending from the transition section 113, and the first wall 111 and the second wall 112 are arranged to face each other. Considering the convenience of installation, the first wall 111 and the second wall 112 gradually approach each other in a direction in which the sliding piece 200 slides to the predetermined position, so that the worker can quickly align the sliding piece 200 with the groove 110 during the installation process, and automatically adjust the relative positions of the first trim 10 and the second trim 20 through the gradual approach of the first wall 111 and the second wall 112 during the sliding process; at the same time, a certain space can be reserved between the position-limiting portion 210 and the guide rail 100 during the sliding process of the sliding piece 200, preventing installation difficulties. In addition, an angle between the first wall 111 and the second wall 112 should not be too large to avoid affecting the guiding effect of the groove 110, and preferably, the first wall 111 and the second wall 112 form the angle of 3° to 10°, for example, the angle may be set to about 5° or 6°.

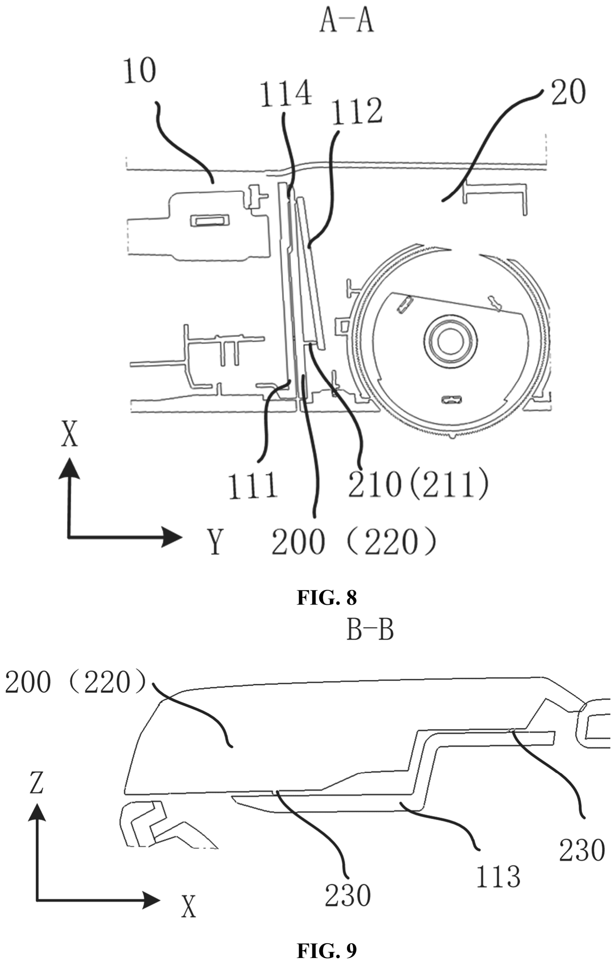

FIG. 8 shows a cross-sectional schematic view taken along the section A-A of FIG. 2, the first wall 111 is provided with a position-limiting rib 114 protruding along the Y direction, and when the sliding piece 200 slides to the predetermined position, the position-limiting rib 114 can abut against the sliding piece 200. Considering the potential for friction and noise between components, particularly plastic parts, when there is zero gap, the first trim 10 and the second trim 20 may generate various noises due to vibrations and road irregularities during the vehicle driving. The position-limiting rib is provided between the first trim 10 and the second trim 20, so that the first trim 10 and the second trim 20 may be appropriately spaced from each other, thereby preventing the friction between the first trim 10 and the second trim 20 from generating noises, and improving the user's perceived experience. Specifically, for uniform stress, two position-limiting ribs 114 may be provided, which are respectively arranged at two ends of the first wall 111 in the X direction, and at the same time, the position-limiting rib 114 protrudes about 0.5 mm in the Y direction, making them virtually invisible to the user.

With continued reference to FIG. 8, the position-limiting portion 210 comprises at least one position-limiting ridge 211 protruding from the slider 220 in the Y direction, and when the sliding piece 200 slides to the predetermined position, the position-limiting ridge 211 can abut against the second wall 112. The position-limiting ridge can also avoid the above noise issue, and similarly, two position-limiting ridge 211 can be provided, which are respectively arranged at two ends of the slider 220 along the X direction.

FIG. 9 shows a cross-sectional schematic view taken along the section B-B of FIG.2, the slider 220 or the transition section 113 is provided with a protrusion portion 230, and when the sliding piece 200 slides to the predetermined position, the slider 220 and the transition section 113 abut against each other in the Z direction through the protrusion 230. In the illustrated embodiment, at the bottom of the slider 220, a protrusion 230 is formed by protruding downward in the Z direction, and specifically, two protrusions 230 may be provided, which are respectively arranged at two ends of the slider 220 in the X direction. The arrangement of the protruding portion 230 protruding in the Z direction can facilitate the adjustment and limit the flushness between the first appearance surface 101 and the second appearance surface 202 in the Z direction. The transition section 113 serves as the transitional connecting surface between the first wall 111 and the second wall 112. According to the general structure of the groove shape, the transition section 113 may extend substantially within the XY plane. However, due to the numerous internal modules of the instrument panel assembly 1 and the relatively complex structure, FIG. 9 illustrates how the transition section 113 is shaped to avoid surrounding components without compromising the guidance function of the first wall 111 and the second wall 112. Correspondingly, the shape of the slider 220 must also adapt to the contour of the transition section 113.

In order to facilitate manufacturing, the guide rail 100 is integrally formed with the first trim 10, and/or the sliding piece 200 and the second trim 20 are integrally formed, it can be understood that in some vehicle models, the first trim 10 or the second trim 20 may be a multi-layer structure with a covering material, and the integral forming here refers to integrally forming with the base material of the first trim 10 or the second trim 20.

In some embodiments, the vehicle instrument panel assembly 1 further comprises an instrument panel frame (not shown). During installation, one of the first trim 10 and the second trim 20 can be first fixed on the instrument panel frame via screws and/or clips. Generally, one of the first trim 10 and the second trim 20 with a larger size is first fixed on the instrument panel frame, or one of the first trim 10 and the second trim 20 with a higher installation accuracy requirement is first fixed on the instrument panel frame; then, the first trim 10 and the second trim 20 are matched and limited by using the above guide rail 100 and the sliding piece 200; and then the other of the first trim 10 and the second trim 20 is fixed on the instrument panel frame via screws and/or clips. This approach avoids the issue of large cumulative tolerance in conventional designs, where each trim or module is directly connected to the instrument panel frame, leading to long dimensional chains. By adopting the above structure and install method, manufacturing precision requirements are effectively reduced, and the gap and flushness between the first trim 10 and the second trim 20 are more easily controlled, thereby improving the perceived quality of the vehicle interior and enhancing user experience.

In some embodiments, the present disclosure also provides a vehicle comprising the vehicle instrument panel assembly 1 as described above.

The technical content and technical features of the present disclosure have been disclosed above, however, it can be understood that under the inventive idea of the present disclosure, those skilled in the art can combine different embodiments or examples described in the present disclosure and the features of different embodiments or examples, but all fall within the protection scope of the present disclosure.

The description of the above embodiments is exemplary rather than limitative, and the protection scope of the present disclosure is defined by the appended claims.

## Claims

1. A vehicle instrument panel assembly (1) comprising a first trim (10) and a second trim (20), wherein the first trim (10) is provided with a guide rail (100) and a first appearance surface (101), and the second trim (20) is provided with a sliding piece (200) and a second appearance surface (202), and the first appearance surface (101) is adjacent to the second appearance surface (202); wherein the sliding piece (200) is configured to be capable of sliding in the guiding rail (100) along a first direction (X), and the sliding piece (200) is provided with a position-limiting portion (210) configured to limit relative positions of the sliding piece (200) and the guide rail (100) along a second direction (Y) so as to limit a gap between the first appearance surface (101) and the second appearance surface (202) when the sliding piece (200) slides to a predetermined position, wherein the second direction (Y) is perpendicular to the first direction (X).

2. The vehicle instrument panel assembly (1) according to claim 1, wherein the guide rail (100) is provided at an end of the first trim (10) along the second direction (Y), the sliding piece (200) is provided at an end of the second trim (20) facing the first trim (10), the sliding piece (200) comprises a slider (220) extending along the first direction (X), and the guide rail (100) comprises a groove (110) having an opening configured to allow the slider (220) to enter into the groove (110) along the first direction (X).

3. The vehicle instrument panel assembly (1) according to claim 2, wherein the groove (110) comprises a first wall (111), a transition section (113) extending from the first wall (111), and a second wall (112) extending from the transition section (113), wherein the first wall (111) and the second wall (112) are arranged to face each other, and the first wall (111) and the second wall (112) gradually approach each other in a direction in which the sliding piece (200) slides to the predetermined position.

4. The vehicle instrument panel assembly (1) according to claim 3, wherein the first wall (111) and the second wall (112) form an angle of 3° to 10°.

5. The vehicle instrument panel assembly (1) according to claim 3, wherein the first wall (111) is provided with a position-limiting rib (114) protruding along the second direction (Y), and when the sliding piece (200) slides to the predetermined position, the position-limiting rib (114) abuts against the sliding piece (200).

6. The vehicle instrument panel assembly (1) according to claim 3, wherein the position-limiting portion (210) comprises a position-limiting ridge (211) protruding from the slider (220) in the second direction (Y), and when the sliding piece (200) slides to the predetermined position, the position-limiting ridge (211) abuts against the second wall (112).

7. The vehicle instrument panel assembly (1) according to claim 3, wherein the slider (220) or the transition section (113) is provided with a protruding portion (230), and when the sliding piece (200) slides to the predetermined position, the slider (220) and the transition section (113) abuts against each other through the protruding portion (230) so as to limit flushness between the first appearance surface (101) and the second appearance surface (202).

8. The vehicle instrument panel assembly (1) according to any one of claims 1 to 7, wherein the guide rail (100) is integrally formed with the first trim (10), and/or the sliding piece (200) is integrally formed with the second trim (20).

9. The vehicle instrument panel assembly (1) according to any one of claims 1 to 7, further comprising an instrument panel frame, wherein the first trim (10) and the second trim (20) are fixed to the instrument panel frame by screws and/or clips.

10. A vehicle, comprising the vehicle instrument panel assembly (1) according to any one of claims 1 to 9.
